# EUROPEAN PATENT APPLICATION

(11) **EP 1 331 614 A2**
(43) Date of publication of application: **30.07.2003**
(21) Application number: 02396183.2
(22) Date of filing: 10.12.2002
(51) Int. Cl.: G07F 7/10

(54) **Method of loading a secret key of one device into another device**

(30) Priority: 12.12.2001 FI 20012449
(71) Applicant: Setec Oy, 01740 Vantaa (FI)
(72) Inventor: Hansson, Mika, 11120 Riihimäki (FI); Rantala, Janne, 02260 Espoo (FI); Leiwo, Jussipekka, 02610 Espoo (FI)
(74) Representative: Holmström, Stefan Mikael

(57) **Abstract**

The present invention relates to a method for taking into use the secret key of a first device as a secret key in a second device. In order to enable the restoration of the secret key in the second device, (A) the first device calculates a first parameter (R1) having a correlation to the secret key (K) and to a second parameter (R2) so as to allow the secret key to be calculated by a predetermined algorithm utilizing the first and second parameters, (B) at least the first parameter (R1) is received from the output of the first device, (C) the first (R1) and the second parameters (R2) are input in the second device, and (D) the second device calculates the secret key (K) using said predetermined algorithm utilizing the first (R1) and second (R2) parameters.

## Description

The present invention relates to a device for restoring a secret key. Examples of devices in which the invention is applicable are smart cards utilizing the public key infrastructure (PKI) or a secret key system. In the following, the invention will be described primarily with reference to smart cards, although it is to be noted that the invention is also usable in other devices, in whose memory a secret key is stored.

A smart card-specific secret key is usually stored in the memory of smart cards, which the smart card utilizes during usage. An example of such a smart card is an organization-specific organization card, for instance in the internal use of a given company, which card utilizes the public key infrastructure. In the memory of such a card a secret key is stored that forms a pair with the public key, which enables for example the encryption of a message to be sent. Thus, the holder of the card is able to receive an encrypted message that the sender has encrypted using the public key handed over to him by the holder of the card. The holder of the card is able to decrypt the encryption of such an encrypted message by using the secret key in the memory of the card.

In devices of the kinds described above, it is extremely important that an outsider does not get hold of the secret key of the device. Having the secret key fall into the possession of an outsider would enable cloning of the device, i.e. a copy could be made of the device, in whose memory the same secret key is stored as is stored in the memory of the original device. If this were possible, and said device were for example an organization card suitable for decoding an encrypted message, then the cloning of the device would result in the user of the cloned device being able to decrypt all messages encrypted using the public key corresponding to the secret key of said device. This could cause much damage to said organization.

In known solutions the aim is to protect the secret key (or secret keys, if there are several) of a device in such a way that the secret key of the device is stored only in the memory of the device, and in such a way that the device under no circumstances outputs the secret key via an output. Consequently, the secret key is utilized only in calculation operations inside the device. In addition, the aim is to perform the calculation operations inside the device, in which the secret key is utilized, in such a manner that any outside attacker is unable to collect such data based on which he could find out the secret key of the device.

A problem associated with known solutions is, however, that if the device for one reason or another gets destroyed or broken, its holder needs a replacement device instead. In this case it would be preferable that the holder of the original device could be given a device for use in whose memory the same secret key is stored as was stored in the memory of the original device.

The object of the present invention is to solve the above problem and to provide a solution enabling the secret key of the device to be taken into use in another device, when needed, without any risk of the secret key becoming known to outsiders. This object is achieved by the method of the invention for taking into use the secret key of a first device as a secret key in a second device. The method of the invention is characterized by calculating a first parameter with the first device, the parameter having a correlation to the secret key and to at least a second parameter so as to allow the secret key to be calculated by a predetermined algorithm utilizing at least the first and second parameters, receiving at least the first parameter from the output of the first device, inputting at least the first and second parameters in the second device, and calculating the secret key with the second device using said predetermined algorithm utilizing at least the first and second parameters.

The invention also relates to a device comprising: a memory in which a secret key is stored, means for calculating a response utilizing a predetermined calculation algorithm and the secret key, and an output for outputting said response further. The device of the invention is characterized in that the device also comprises: calculation means for calculating a first parameter having a correlation to the secret key and to at least a second parameter so as to allow the secret key to be calculated by a predetermined algorithm utilizing at least the first and second parameters, and that the device is arranged to output said first parameter further via the output.

The invention still further relates to a device comprising: a memory, means for calculating a response utilizing a predetermined calculation algorithm and a secret key, and an output for outputting said response further. The device of the invention is characterized in that the device comprises an input for receiving at least a first parameter and a second parameter, calculation means for calculating the secret key by a predetermined algorithm utilizing at least the first and second parameters, and means for storing the calculated secret key in said memory.

The invention is based on the idea that it is possible to take into use the secret key of a first device in a second device without causing any risk of the secret key becoming known to outsiders, when the secret key can be later calculated by an algorithm utilizing at least a first and a second parameter. Since the secret key can be calculated later by means of the parameters, there is no need to create a database for maintaining device-specific information on secret keys of devices.

In accordance with the invention, a sufficient security level is achieved when the calculation of the secret key is based on a calculation algorithm and on at least a first and a second parameter. This allows the first and the second parameter to be handed over for storage to different parties. However, in accordance with the invention, the calculation of the secret key may also be based on more than two parameters. In this case, if the calculation is based on for instance three parameters, then the first device is used to calculate the secret key by utilizing the calculation algorithm, the first parameter, the second parameter and the third parameter. Similarly, when the secret key of the first device is to be restored later in the second device, the first parameter, the second parameter and the third parameter are input in the second device. The second device then calculates the secret key from these parameters utilizing said calculation algorithm.

In accordance with the invention it is sufficient to maintain data on the first and second parameters of the devices. These data can be maintained physically in different places and by different parties. An alternative is for the manufacturer of the devices to maintain a database for the second parameters of the devices, for example, whereas the party handing over the devices to the end user maintains a database for the first parameters of the devices. Such a solution achieves a very good security level, since there is no single party who would be able to alone and independently take into use the secret key of a given device in another device.

In accordance with the invention, taking into use the secret key of a first device in a second device is subject to the availability of both the first and the second parameter and the use of exactly such "a second device" where the right algorithm is stored, which utilizes the first and second parameters, and, based on these, concludes the right secret key. In the above exemplary case, the prerequisite for taking into use the secret key in a second device is that the manufacturer of the first and second devices and the party handing it over to the end user participate in a procedure for taking into use the secret key in the second device.

In a preferred embodiment of the invention, the second parameter is input in the first device via its input, whereupon the first device utilizes it in calculating the first parameter. This embodiment brings about the advantage that the second parameters of different devices can be selected in the desired manner, avoiding the need to maintain a database for the second parameters. An alternative is to calculate the second parameters of the devices by means of a given algorithm and the serial number of the devices, for example. Accordingly, the second parameter of any device can be later calculated when the serial number of the device and the algorithm required for the calculation are known.

In a preferred embodiment of the invention, the first device is arranged to output the first parameter via its output only once. This embodiment brings about the advantage that the party that needs to have the first parameter can rest assured that no one else has been able to read the first parameter from the device if the reading of the first parameter is successful. Similarly, if a device is concerned that is used to generate also the second parameter, the device is preferably arranged to output also this parameter via its output only once. Accordingly, when the party that has to have the second parameter has obtained it from the output of the device, no one else is able to get it again from the output of the device at any stage. This ensures that if the right parties have the first and second parameters at their disposal, then no one else has been able to have these parameters previously, and no one is later able to get these parameters into their possession.

The preferred embodiments of the method and device of the invention are described in the attached dependent claims 2 to 6 and 8 to 11.

In the following, the invention will be described in detail by way of example with reference to the accompanying drawings, in which
Figure 1 is a flow diagram of a first preferred embodiment of the method of the invention,
Figure 2 illustrates a first preferred embodiment of the first and second devices of the invention, and
Figure 3 illustrates a second preferred embodiment of the first and second devices of the invention.

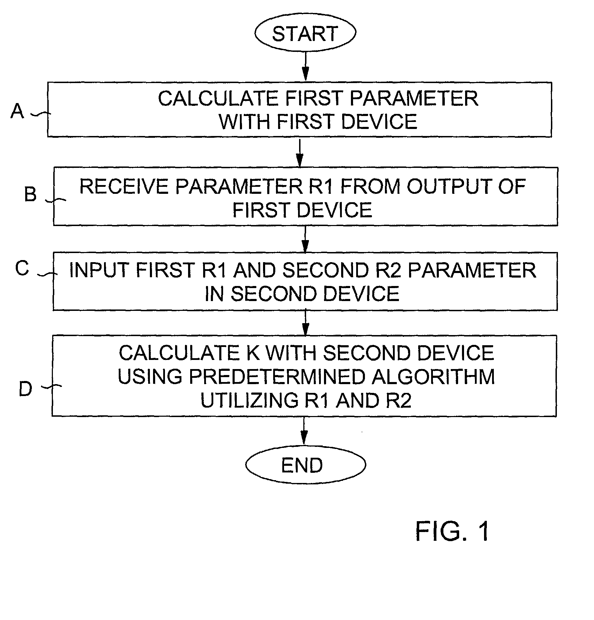

Figure 1 is a flow diagram of a first preferred embodiment of the method of the invention. In the following, the assumption is by way of example that the first device is an organization card, i.e. a smart card, in whose memory a secret key is stored during manufacture.

In block A, a first device is used to calculate a first parameter R1, which correlates to a secret key K and at least a second parameter R2 so as to allow the secret key to be calculated later by a given algorithm utilizing at least the first and second parameters. More than two parameters can also be used in calculating the secret key. In accordance with the invention, it is sufficient that the calculation of the secret key is based on at least two parameters. In the following the invention will be described by way of example by means of such an embodiment where the calculation of the secret key is based on two parameters.

Depending on the implementation, the second parameter R2 can either be input in the first device via its input before the calculation or, alternatively, the first device can be arranged to generate it. If the first device generates the second parameter R2 itself, then this may be carried out for instance by utilizing a random number generator, which is used to generate a random number that fulfils given conditions and whose value is given to the second parameter R2.

The assumption in the exemplary case of Figure 1 is that the second parameter R2 remains known to the manufacturer of the device. Thus, if the first device generates the second parameter, then the manufacturer of the device receives the second parameter R2 from the output of the first device before the first device is delivered further. The first device is preferably programmed to output from its output the second parameter only once, whereby the manufacturer of the device can be sure that no one else is able to get hold of the second parameter later.

The assumption in the exemplary case of Figure 1 is that the first device is an organization card, and that the first parameter R1 remains in the possession of said organization. In block B, the first parameter R1 is received from the output of the first device. This measure is taken by a unit of the organization attending to the final preparation of the organization card before the first device is delivered to its end user. The first device is preferably programmed to output the first parameter only once from its output. This way said organization can be sure that if the first parameter is obtained from the output of the first device, then this means that no one else (not even the manufacturer of the device) has got the first parameter into their possession.

When the first device is destroyed for one reason or another, and its holder requires a second device as a replacement, i.e. a new organization card having the same secret key as the first device, then the organization gets in touch with the manufacturer of the organization card in order to obtain a new organization card, i.e. a second device. The manufacturer then makes a second device in whose memory the manufacturer stores a predetermined algorithm by means of which the secret key of the first device can be calculated when the first parameter R1 and the second parameter R2 of the first device are available for use. These parameters are input in the second device in block C. The input may take place for instance by the manufacturer inputting the second parameter R2 in the second device having manufactured the second device, and then delivers the second device to the organization that ordered the organization card. The unit attending to the final preparation of the organization card of said organization then inputs the first parameter R1 in the second device.

In block D, the secret key of the first device is calculated with the second device by means of a predetermined algorithm stored therein. The calculation utilizes parameters R1 and R2. The calculated secret key is stored in the memory of the second device, whereupon the second device, i.e. the organization card, is ready to be delivered to the end user. The second device now uses the same secret key as the original first device did.

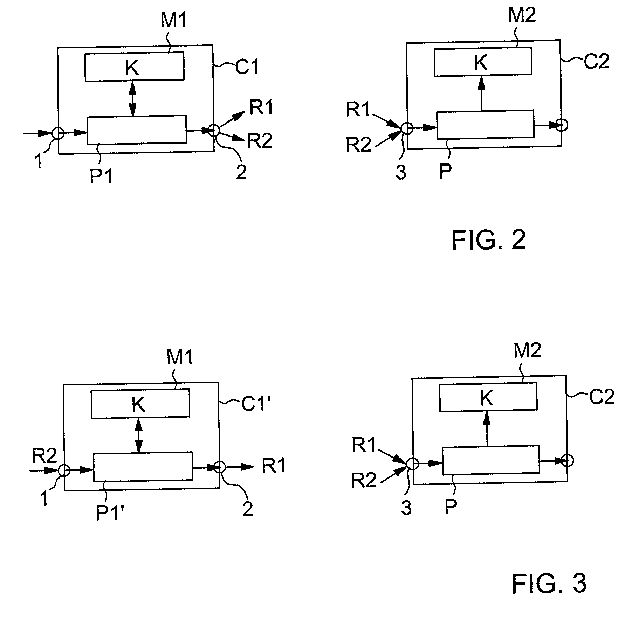

Figure 2 illustrates a first preferred embodiment of the first and second devices of the invention. The assumption in the case of Figure 2 is by way of example that the first device C1 and the second device C2 are both organization cards, which can be utilized for instance for decoding an encrypted message.

Encryption of a message and transmission thereof in an encrypted format to a receiver may take place for instance by the receiver of the message having given his public key to the sender in advance, the public key forming a pair with the receiver's secret key. In this case the sender codes the message using the public key and the receiver decodes it using the secret key.

When an encrypted message is decoded, the device C1 generates a response, i.e. a decoded "plain text" message, to the input, i.e. an encrypted message, received via its input 1. The processor P1 of the device C1 then retrieves a device-specific secret key K from the memory M1 of the device and uses it to calculate the response by utilizing a predetermined algorithm. The device C1 outputs the response, i.e. the decoded "plain text message" from its output 2.

If the message to be sent is very long, it could be appropriate for the sender of the message to code the message using a separate code key, which can also be used to decode the message. In this case, too, the receiver of the message has released his public key to the sender in advance, the public key forming a pair with the receiver's secret key. The sender then codes the message using the code key and the code key using the public key of the receiver, whereupon he sends the coded message and the coded code key to the receiver. The receiver is now able to decode the code key with the device C1 by inputting the input formed from the coded code key into its input 1. The device C1 then generates a response using the secret key K stored in its memory, the response being formed from a plain text code key. The receiver then utilizes this code key to decode the received message. Such an arrangement avoids the input of very long messages to be decoded in the device C1.

The secret key K is stored during manufacture in the memory of the device C1 visible on the left in Figure 2. In order for said secret key not to get into the hands of outsiders, the secret key is not stored anywhere else except in the memory of the device. Thus, not even the manufacturer of the device knows the secret key of the device afterwards. The device C1 comprises a random number generator for generating a second parameter R2 fulfilling given conditions. Using the secret key K stored in the memory and the second parameter R2, the processor P1 of the device C1 calculates the first parameter R1. The calculation is performed using an algorithm that generates such a correlation between parameters R1 and R2 and the secret key K that the secret key K can later be calculated using a predetermined algorithm that utilizes parameters R1 and R2.

The device C1 is programmed to output parameters R1 and R2 from its output 2 only once. Before the manufacturer of device C1 delivers it to the client, the manufacturer of the device reads the second parameter R2 from the output 2 of the device. The manufacturer stores this parameter R2 in a database from where it is retrievable for instance based on the serial number of the device C1.

Once the device C1 is delivered to the client, such as to an organization wherein it is utilized, the client reads the first parameter R1 at the output 2 of the device. The client stores this parameter in the database, from where it is retrievable for instance based on the serial number of the device C1. The device C1 can then be delivered to its end user.

If the device C1 is destroyed and the end user has to get a second device having the same secret key as the first device C1 to replace the first device C1, the client orders it from the original manufacturer. When ordering, the client gives the serial number of the first device. The manufacturer uses this serial number to find out from the database the second parameter R2 that was received from the output of the first device C1. The manufacturer then makes the second device C2, which is programmed such that its processor P is capable of calculating the secret key of the first device utilizing the predetermined algorithm based on the first parameter R1 and the second parameter R2.

Before the second device is delivered to the client, the manufacturer inputs the second parameter R2 in the second device C2 via its input 3. Once the client receives the second device, he retrieves from the database, based on the serial number of the destroyed first device, the first parameter R1 received from the output of the first device C1. The client inputs this parameter R1 in the input 3 of the second device. The processor of the second device then calculates a secret key K, which it stores in the memory M2 of the device. The second device is now ready for use and can be delivered to the end user to replace the destroyed device.

There are several alternative algorithms that can be utilized to calculate the secret key from parameters R1 and R2. An alternative is for parameters R1 and R2 to be bit strings, their individual bits being subjected to an XOR operation, the bit string generated as the end result forming the secret key K. In other words, the value of the first bit of the secret key K = (R1 value of first bit) XOR (R2 value of first bit), value of second bit of secret key K = (R1 value of second bit) XOR (R2 value of second bit) etc.

The above stated that the device C1 in Figure 2 is programmed such that parameters R1 and R2 can be received only once from its output. However, in accordance with the invention, it is feasible that the device is able to output the parameters several times. However, in this case it is important that the device comprise a counter for verifying how many times the second parameter R2, for example, was received from the output of the device C1. This is necessary in order for the client to be able to detect if the second parameter R2, intended for his information only, has been previously read from the output of the device before the client got hold of the device. The risk then exists that someone (for example the manufacturer of the device) has the second parameter in his possession and is thus able to make a copy of the device, if desired, such that the copy uses the same secret key as the first device.

Figure 3 illustrates a second preferred embodiment of the first and second devices of the invention. The embodiment of Figure 3 largely corresponds to the case of Figure 2, wherefore the embodiment of Figure 3 is described in the following mainly concentrating on the differences.

The first device C1' of Figure 3 differs from the first device C1 of Figure 2 in that in the case of Figure 3, the first device receives the second parameter R2 via its input. The second parameter is thus not generated in the first device as in the case of Figure 2. In the case of Figure 3, the manufacturer of the device is able to determine the value of parameter R2, and the device C1' does not consequently have to output it via its output 2. The second device C2 visible in Figure 3 fully corresponds to the second device described in the case of Figure 2, i.e. it is able to calculate the secret key K based on the first and second parameters R1 and R2 by utilizing a predetermined algorithm.

The fact that the manufacturer is able to determine the second parameter R2 input in the first device brings about the advantage that the manufacturer of the device does not have to maintain a device-specific database about the second parameters of each device. Instead, the manufacturer may have an algorithm, for example, at his disposal for calculating parameter R2 based on the serial number of the device. Some product-specific secret can also be used in the calculation, i.e. for instance a secret parameter known only to the manufacturer. This allows the manufacturer of the device to calculate the second parameter of a given device at any time provided the serial number of the device, the product-specific secret, and the algorithm are available.

It is to be understood that the above specification and the related figures are only intended to illustrate the present invention. Different variations and modifications of the invention are apparent to those skilled in the art, without deviating from the scope of the invention disclosed in the attached claims.

## Claims

1. A method for taking into use a secret key of a first device as a secret key in a second device, **characterized by**
calculating a first parameter with the first device, the parameter having a correlation to the secret key and to at least a second parameter so as to allow the secret key to be calculated by a predetermined algorithm utilizing at least the first and second parameters,
receiving at least the first parameter from the output of the first device,
inputting at least the first and second parameters in the second device, and
calculating the secret key with the second device using said predetermined algorithm utilizing at least the first and second parameters.

2. A method as claimed in claim 1, **characterized by** arranging the first device to output the first parameter only once via its output.

3. A method as claimed in claim 1, **characterized by** maintaining a counter function in the first device, the function indicating how many times the first parameter has been output from the output of the first device.

4. A method as claimed in any one of claims 1 to 3, **characterized by** inputting the second parameter in the first device via its input before calculating the first parameter.

5. A method as claimed in claim 1, **characterized in that** in the method:
the second parameter is also generated with the first device,
the first device is arranged to output the first parameter only once via its output, and
the first device is arranged to output the second parameter only once via its output.

6. A method as claimed in claim 1, **characterized in that** in the method:
the second parameter is also generated with the first device,
a counter function is maintained in the first device, the function indicating how many times the first parameter has been output from the output of the first device, and
a counter function is maintained in the first device, the function indicating how many times the second parameter has been output from the output of the first device.

7. A device (C1, C1') comprising:
a memory (M1) in which a secret key (K) is stored,
means (P1, P1') for calculating a response utilizing a predetermined calculation algorithm and the secret key (K), and
an output (2) for outputting said response further, **characterized in that** the device further comprises:
calculation means (P1, P1') for calculating a first parameter (R1) having a correlation to the secret key (K) and to at least a second parameter (R2) so as to allow the secret key (K) to be calculated by a predetermined algorithm utilizing at least the first (R1) and second (R2) parameters, and
that the device (C1, C1') is arranged to output said first parameter further via the output (2).

8. A device as claimed in claim 7, **characterized in that** said device (C1') is arranged to receive said second parameter (R2) via an input (1) in the device.

9. A device as claimed in claim 7, **characterized in that** the calculation means (P1) are arranged to generate also the second parameter (R2), and that the device (C1) is arranged to output also the second parameter (R2) via the output (2).

10. A method as claimed in any one of claims 7 to 9, **characterized in that** the device (C1, C1') is arranged to output said first parameter (R1) and/or said second parameter (R2) further via the output only once.

11. A method as claimed in any one of claims 7 to 9, **characterized in that** the device (C1, C1') comprises a counter indicating the number of times the first parameter (R1) and/or the second parameter (R2) has been output further via the output in the device.

12. A device (C2) comprising:
a memory (M2),
means (P) for calculating a response utilizing a predetermined calculation algorithm and a secret key (K), and
an output (3) for outputting said response further, **characterized in that**
the device (C2) comprises an input for receiving at least a first parameter (R1) and a second parameter (R2),
calculation means (P) for calculating the secret key (K) by a predetermined algorithm utilizing at least the first (R1) and second (R2) parameters, and
means for storing the calculated secret key in said memory (M2).
